# EUROPEAN PATENT APPLICATION

(11) **EP 1 469 298 A1**
(43) Date of publication of application: **20.10.2004**
(21) Application number: 02792020.6
(22) Date of filing: 26.12.2002
(51) Int. Cl.: G01N 21/01, G01N 21/35

(54) **SPECTRAL MEASURING DEVICE**

(30) Priority: 28.12.2001 JP 2001399510
(71) Applicant: Tochigi Nikon Corporation, Otawa-shi, Tochigi 324-8625 (JP); Nikon Corporation, Tokyo 100-8331 (JP)
(72) Inventor: USAMI, Mamoru, c/o Nikon Corporation, Chiyoda-ku, Tokyo 100-8331 (JP); IWAMOTO, Toshiyuki, c/o NIKON CORPORATION, Chiyoda-ku, Tokyo 100-8331 (JP)
(74) Representative: Walaski, Jan Filip
(86) International application number: PCT/JP2002/013647
(87) International publication number: WO 2003/058212

(57) **Abstract**

A holder (30) that holds a specimen (100) is disposed outside a vacuum chamber (50) with a light transmission window (52a). A light detection unit and a light radiation unit having a terahertz light generator (6) are fixed on a base (53) disposed inside the vacuum chamber. The light radiation unit irradiates terahertz pulse light onto the specimen (100) placed outside the vacuum chamber via the light transmission window (52a) and the resulting specimen light from the specimen (100) is received at the light detection unit via the light transmission window (52a). The base (53) in the vacuum chamber and the holder (30) disposed outside the vacuum chamber are connected via a connecting member (54a) passing displaceably through a barrier wall of a vacuum chamber (50) with airtight sealing so as to fix the relative position of the holder to the base.

## Description

The disclosure of the following priority application is herein incorporated by reference:
Japanese Patent Application No. 2-001-399510 filed December 28, 2001

### TECHNICAL FIELD

The present invention relates to a spectrometering apparatus that radiates light with a predetermined wavelength onto a specimen and measures the spectral characteristics of the specimen by detecting light from the specimen.

### BACKGROUND ART

Optical apparatuses utilized as various types of measuring apparatuses each comprise a holder that holds the measurement object and an optical system that radiates a predetermined type of light onto the measurement object and effects an optical action on light obtained from the measurement object.

Examples of such optical apparatuses that use terahertz light include spectroscopes, dielectric constant measuring apparatuses, inspection apparatuses, imaging apparatuses that generate an image indicating the dielectric constant distribution in the measurement target and the like. In addition, optical apparatuses that use light other than terahertz light include, for instance, spectroscopes, film thickness measuring apparatuses and inspection apparatuses.

If there are molecules that absorb the light in the wavelength range needed for the measurement exist in the optical path in such an optical apparatus, it may not be possible to achieve an accurate measurement or a desired measurement. For instance, when executing spectrometry in the infrared range in the atmosphere, absorption of the light into water vapor molecules, carbon dioxide molecules and the like is observed. For this reason, when a highly accurate measurement needs to be performed or when data in the vicinity of such absorption need to be acquired, the apparatus, i.e., the optical path, is evacuated or the inside of the apparatus is purged so as to remove those molecules. The term "purge" in this context refers to replacement of the gas inside the apparatus with a clean purging gas such as dry nitrogen.

For instance, the purging gas may be continuously supplied into the apparatus from the outside while the gas inside the apparatus is discharged, or the inside of the apparatus may be filled with the purging gas after a vacuum state is first achieved in the apparatus and the apparatus may then be kept in a sealed state.

In an apparatus in the related art structured to enable a measurement or the like in an evacuated state or a purged state as described above, a rectangular parallelepiped casing covering the entire apparatus forms a single chamber that can be evacuated and the holder used to hold the measurement object and the entire optical system are enclosed by the chamber. The holder and the optical system are fixed onto a base provided as an independent member inside the casing. For this reason, even if the casing becomes distorted as the chamber is evacuated, the positional relationship between the optical system and the holder holding the measurement object remains unchanged. Thus, even when the casing becomes distorted, the accuracy of the measurement or the like is not compromised.

However, since the holder which holds the measurement object is disposed together with the optical system within a single chamber, the vacuum state inside the chamber needs to be released and then the chamber needs to be reevacuated every time the measurement object is replaced, resulting in dead time attributable to the wait period necessitated during a replacement. It is to be noted that in some apparatuses with a holder disposed within a vacuum chamber, a turret at which a number of measurement objects can be mounted is used so as to replace the measurement object by rotating the turret. However, there is a limit to how big such a turret can be without the apparatus itself becoming bulky, and thus, there is a limit to the number of measurement objects that can be mounted at the turret. For this reason, dead time still occurs when a large number of measurement objects need to be measured.

### DISCLOSURE OF THE INVENTION

An object of the present invention is to provide a spectrometering apparatus capable of performing highly accurate measurement.

A spectrometering apparatus according to the present invention comprises: a chamber that is evacuated to achieve a vacuum state and includes a light transmission window; a generator that generates measuring light; an illumination optical system that guides the measuring light onto a specimen; a detector that detects specimen light from the specimen; and a detection optical system that guides the specimen light from the specimen irradiated with the measuring light to the detector, and: the generator, the illumination optical system, the detector and the detection optical system are disposed inside the evacuated chamber; and the specimen is placed outside the evacuated chamber.

Also, a spectrometering apparatus according to the present invention comprises: a chamber that is evacuated to achieve a vacuum state and includes a light transmission window; a generator that generates terahertz pulse light; an illumination optical system that guides the terahertz pulse light onto a specimen; a detector that detects specimen light from the specimen; and a detection optical system that guides the specimen light from the specimen irradiated with the terahertz pulse light to the detector, and: the generator, the illumination optical system, the detector and the detection optical system are disposed inside the evacuated chamber; and the specimen is placed outside the evacuated chamber.

In any cases, it is preferred that: the transmission window is constituted of a polyethylene or quartz.

Also, the spectrometering apparatus further comprises: a laser light source that generates laser pulse light; a splitter that splits the laser pulse light generated by the laser light source into pump light to be guided to the generator and probe light to be guided to the detector; and an optical path length altering device that alters an optical path length of the pump light guided to the generator and/or an optical path length of the probe light guided to the detector, and: the detector samples the specimen light from the specimen entering via the transmission window in synchronization with an irradiation timing of the pump light and/or the probe light; and a distance between the transmission window and the specimen is set larger than an optical path length altering range of the optical path length altering device. By adopting these features, it is possible to eliminate the adverse effect of multiply reflected light on the spectrometry.

The laser light source, the splitter and the optical path length altering device may be disposed outside the chamber.

The spectrometering apparatus further comprises: a laser light source that generates laser pulse light; a splitter that splits the laser pulse light generated by the laser light source into pump light to be guided to the generator and probe light to be guided to the detector; and an optical path length altering device that alters an optical path length of the pump light guided to the generator and/or an optical path length of the probe light guided to the detector, and the detector samples the specimen light from the specimen entering via the transmission window in synchronization with an irradiation timing of the pump light and/or the probe light. And the spectrometering apparatus further includes a processing circuit that separates and removes a signal attributable to reflected light resulting from reflection at the transmission window from a detection signal input thereto from the detector. By this means, the adverse effect of the light reflected at the transmission window on the spectrometry can be eliminated.

Also, the spectrometering apparatus further comprises: a laser light source that generates laser pulse light; a splitter that splits the laser pulse light generated by the laser light source into pump light to be guided to the generator and probe light to be guided to the detector; and an optical path length altering device that alters an optical path length of the pump light guided to the generator and/or an optical path length of the probe light guided to the detector, and the detector samples the specimen light from the specimen entering via the transmission window in synchronization with an irradiation timing of the pump light and the probe light. And the spectrometering apparatus further includes a processing circuit that separates and removes a signal attributable to multiply reflected light resulting from multiple reflection occurring between the specimen and the transmission window from a detection signal input thereto from the detector. By this means, the adverse effect of multiply reflected light occurring between the transmission window and the specimen on the spectrometry can be eliminated.

Another spectrometering apparatus according to the present invention comprises: a chamber that has a light transmission window and is purged with gas which does not absorb terahertz pulse light; a generator that generates terahertz pulse light; an illumination optical system that guides the terahertz pulse light onto a specimen; a detector that detects specimen light from the specimen; and a detection optical system that guides the specimen light from the specimen irradiated with the terahertz pulse light to the detector, and: the generator, the illumination optical system, the detector and the detection optical system are disposed inside the chamber; and the specimen is placed outside the chamber. By purging the chamber, water vapor, CO₂ and like in the optical path can be removed to prevent a reduction in the quantity of the terahertz pulse light.

Also, it may be adopted that: a fluid tank, formed so as to allow the specimen to be immersed therein in a fluid with a small absorption coefficient for terahertz light and allow the fluid to be in contact with an outer surface of the transmission window, is disposed outside the chamber; the illumination optical system guides the terahertz pulse light onto the specimen via the transmission window and the fluid inside the fluid tank; and the detector receives the specimen light via the fluid inside the fluid tank and the transmission window. In this case, the quantity of the terahertz pulse light does not become impaired.

Furthermore, the spectrometering apparatus may further comprises a gas jet device that replaces atmosphere in a space between the transmission window and the specimen with gas that does not absorb the terahertz pulse light by supplying the gas into the space between the transmission window and the specimen.

The spectrometering apparatus may further comprises: a holder that holds the specimen outside the chamber; a base disposed within the chamber, to which the generator and the detector are fixed; and a connecting member that displaceably passes through a barrier wall of the chamber with airtight sealing and connects the base and the holder so as to fix positions thereof relative to each other. By adopting the structure described above, a highly accurate measurement can be performed without being affected by the distortion of the chamber resulting from the evacuation.

Another spectrometering apparatus according to the present invention comprises: a first vacuum chamber and a second vacuum chamber separated from each other by a barrier wall having a light transmission window; a holder disposed in the first vacuum chamber, which holds a specimen; a light radiation unit disposed inside the second vacuum chamber, which radiates measuring light onto the specimen in the first vacuum chamber via the light transmission window; a light detection unit disposed in the second vacuum chamber, which receives specimen light from the specimen irradiated with the measuring light via the light transmission window; a base disposed in the second vacuum chamber, to which the light radiation unit and the light detection units are fixed; and a connecting member that displaceably passes through barrier wall with airtight sealing and connects the base and the holder so as to fix positions thereof relative to each other. This structure does not allow any distortion of the first and second vacuum chambers caused by the evacuation to affect the spectrometry.

The connecting member may include a number of rod-like members disposed substantially parallel to a virtual centerline and set over distances substantially equal to one another from the centerline around the centerline over substantially uniform angular intervals.

By forming a peripheral wall portion of a chamber in a cylindrical shape, the extent of chamber deformation during the evacuation can be reduced.

### BRIEF DESCRIPTION OF THE DRAWINGS

FIG. 1 is a schematic diagram showing the structure of the optical apparatus achieved in a first embodiment of the present invention;
FIG. 2 is a schematic sectional view taken along line II-II in FIG. 1;
FIG. 3 is a schematic perspective showing the structure of the optical apparatus achieved in the first embodiment of the present invention;
FIG. 4 is a schematic sectional view taken along line IV-IV in FIG. 3;
FIG. 5 is a schematic perspective showing the structure of the optical apparatus achieved in a second embodiment of the present invention;
FIG. 6 is a schematic sectional view taken along line VI-VI in FIG. 5;
FIG. 7 is a schematic perspective showing the structure of the optical apparatus achieved in a third embodiment of the present invention;
FIG. 8 is a schematic sectional view taken along line VII-VII in FIG. 7;
FIG. 9 is a schematic diagram presenting an example of reflection and multiple reflection of terahertz light occurring at the surface of the window;
FIG. 10 presents an example of the detection output;
FIG. 11 illustrates multiple reflection occurring inside the window unit member;
FIG. 12 is a schematic sectional view showing the structure of the optical apparatus achieved in a fourth embodiment of the present invention;
FIG. 13 presents a first example of a variation of the fourth embodiment; and
FIG. 14 presents a second example of a variation of the fourth embodiment.

### BEST MODE FOR CARRYING OUT THE INVENTION

The following is an explanation of the embodiments of the present invention, given in reference to the drawings.

### (First Embodiment)

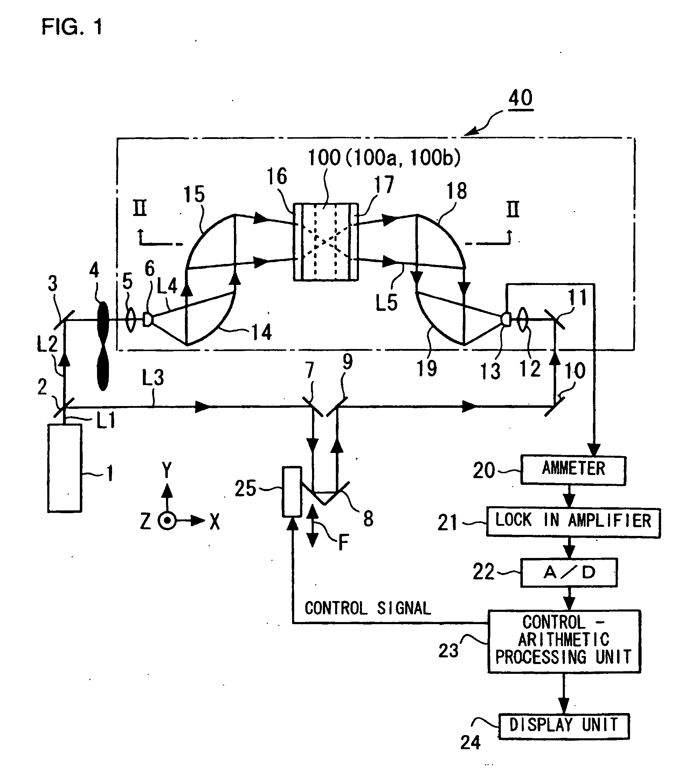

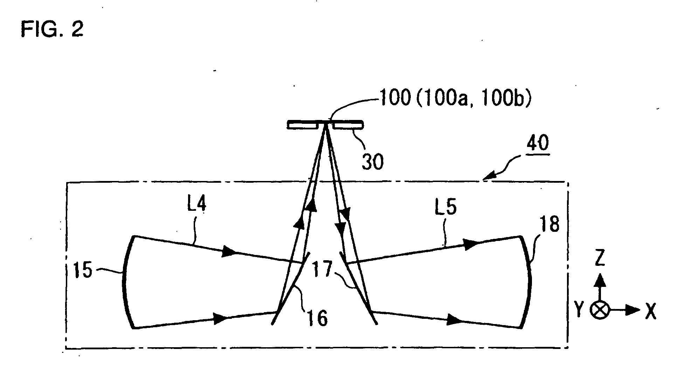

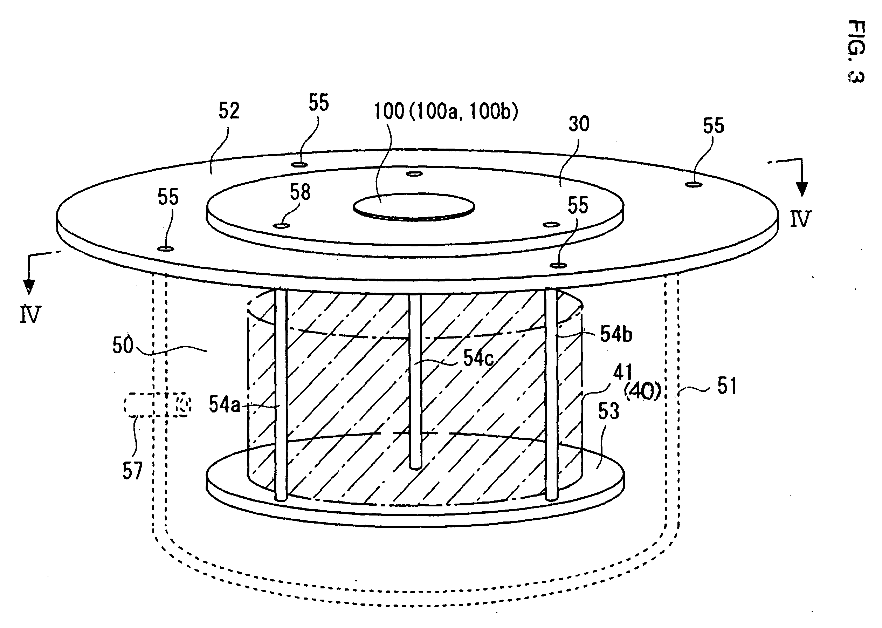

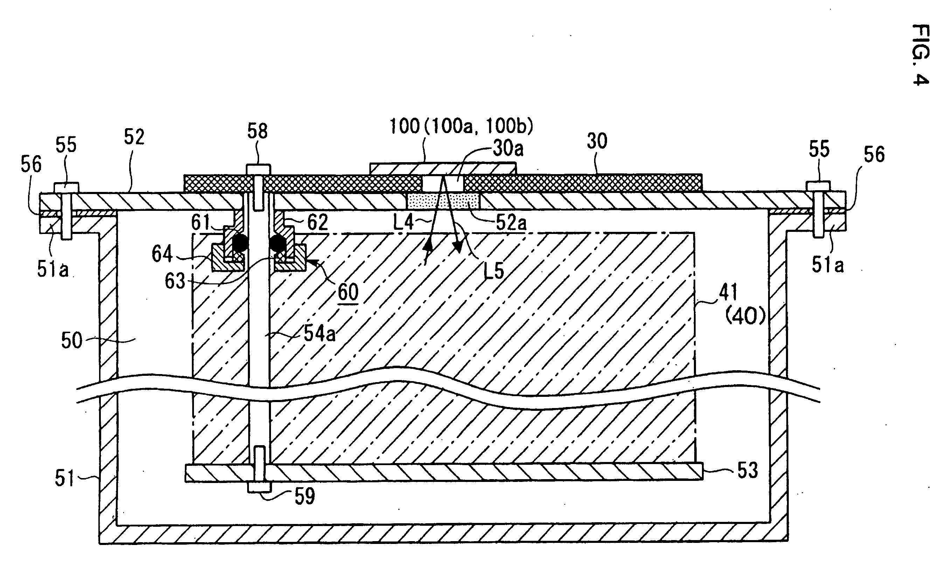

FIG. 1 is a schematic diagram showing the structure of the optical apparatus achieved in the first embodiment of the present invention. FIG. 2 is a schematic sectional view taken along line II-II in FIG. 1. In order to ensure that the invention is understood with ease, an X axis, a Y axis and a Z axis intersecting one another at a right angle are defined as shown in FIGS. 1 and 2. The XY plane is a horizontal plane, the Z axis extends along the vertical direction, the + Z direction extends upward along the vertical direction and the - Z direction extends downward along the vertical direction. FIG. 3 is a schematic perspective of the structure adopted in the optical apparatus in the embodiment. FIG. 4 is a schematic sectional view taken along line IV-IV in FIG. 3.

The optical apparatus achieved in the embodiment is utilized to measure the complex dielectric constant or the like of a specimen 100, i.e., the measurement object, by using terahertz light.

In the optical apparatus achieved in the embodiment, femtosecond pulse light L1 radiated from a femtosecond pulse light source 1 constituted of a laser light source or the like is split into two beams of pulse light L2 and L3 at a beam splitter 2.

One of the two beams into which the femtosecond pulse light L1 is split at the beam splitter 2, i.e., the pulse light L2, functions as pump light (pulse excitation light) used to generate terahertz pulse light at a terahertz light generator 6 by exciting the terahertz light generator 6 constituted of an optical switching device such as a photoconductive antenna or an EO crystal. The pump light L2 travels through a plane mirror 3, is chopped at a light chopper 4 and then is condensed onto the terahertz light generator 6 through a condenser lens 5. It is to be noted that if an optical switching device is used as the terahertz light generator 6, a bias voltage from a bias source (not shown) is applied to the terahertz light generator 6.

The other beam of pulse light, i.e., the pulse light L3, resulting from the split at the beam splitter 2 is used as a probe light (sampling pulse light) to determine the timing with which the terahertz pulse light is detected. The probe light L3 travels through a plane mirror 7, a movable mirror 8 constituted by using two or three plane mirrors in combination, plane mirrors 9, 10 and 11 and a condenser lens 12 and is guided to a terahertz light detector 13. The detector 13 used in the embodiment is an optical switching device in the related art constituted by using a dipole antenna.

The movable mirror 8 disposed on the optical path of the probe light L3 is caused to move along the direction indicated by an arrow F by a moving mechanism 25. The moving mechanism 25 is controlled by a control/arithmetic processing unit 23. As the optical path length of the probe light L3 is altered or varies in correspondence to the distance over which the movable mirror 8 moves, the time at which the probe light L3 arrives at the detector 13 changes. Namely, in the embodiment, the movable mirror 8 and the moving mechanism 25 constitute an optical path length altering (or varying or changing) device which changes the optical path length of the probe light L3. It is to be noted that the distance over which the movable mirror 8 in FIG. 1 moves indicates the optical path length altering range of the optical path altering device. In this example, when the optical path length of the probe light L3 changes by y, the movable mirror 8 will have moved over a distance y/2.

It is to be noted that such an optical path length altering device disposed in the optical path of the pump light L2 instead of the optical path of the probe light L3 will achieve an identical effect. In addition, exactly the same effect will be achieved by providing the optical path length altering device in each of the two optical paths, i.e., the optical path of the probe light L3 and the optical path of the pump light L2, as well.

As the terahertz light generator 6 is excited by the pump light L2, terahertz pulse light L4 is radiated from the generator 6. It is desirable that the terahertz pulse light L4 have a frequency within a range of approximately 0.01 x 10¹² to 100 x 10¹² Hz. The terahertz pulse light L4 is converted to parallel light through a curved mirror 14 such as a parabolic mirror and is then condensed at a condensing position via a curved mirror 15 which may be a parabolic mirror and a plane mirror 16.

As shown in FIGS. 1 and 2, the optical axis of the terahertz light L4, which is contained within a horizontal plane (within a plane parallel to the XY plane) between the generator 6 and the plane mirror 16, is turned upward at the plane mirror 16 oriented as shown in FIG. 2 to extend upward (in the + direction along the z axis) between the plane mirror 16 and the light condensing position.

At the light condensing position at which the terahertz pulse light L4 is condensed, a specimen (measurement object) 100 is held by a specimen holder 30 (see FIG. 2, not shown in FIG. 1). The specimen 100 is held so as to set its bottom surface level and the terahertz pulse light L4 is condensed at a measurement position (a specific local area) on the bottom surface of the specimen 100. The specimen 100 refers to both a measurement target specimen 100a and a reference specimen 100b, and either the measurement target specimen 100a or the reference specimen 100b is held at the specimen holder 30 at any given time. The reference specimen 100b is a material with a known refractive index, such as a metal mirror. While the measurement target specimen 100a may be, for instance, a wafer, it may be a target other than a wafer. It is to be noted that when it is necessary to obtain average information over a relatively large area of the specimen or the overall two-dimensional distribution of sets of local information instead of information at a local area of the specimen 100, a relatively large area on the bottom surface of the specimen 100 should be irradiated with the terahertz pulse light L4 instead of condensing the terahertz pulse light L4 to the local area.

The specimen holder 30 is explained in reference to FIGS. 3 and 4. The upper surface of the specimen holder 30, on which the specimen 100 is placed, functions as a specimen holding surface that is kept level. While the specimen holder 30 is shown as a rectangular member to simplify the illustration in FIG. 2, the specimen holder 30 is actually formed in a disk shape, as shown in FIGS. 3 and 4. An opening 30a is formed around the center of the specimen holder 30, as shown in FIG. 4. The terahertz light L4 enters the measurement position (the specific area) at the bottom surface of the specimen 100 through the opening 30a. At the specimen holder 30, the specimen 100 is simply placed on the specimen holding surface and the specimen 100 is then held by its own weight. However, the specimen holder 30 according to the present invention is not limited to this example. As long as a desired specimen (a desired measurement object) can be held at the specimen holder 30, the specimen holder 30 may be another type of specimen holder in the related art such as a holder that uses clips.

Back in FIGS. 1 and 2, terahertz pulse light L5 reflected at the measurement position at the bottom surface of the specimen 100 travels through plane mirror 17 and the curved mirrors 18 and 19, and is then condensed onto the terahertz light detector 13. The plane mirror 17 and the curved mirrors 18 and 19 are disposed so as to achieve symmetry with the plane mirror 16 and the curved mirrors 15 and 14 respectively relative to the plane which contains the light condensing position described earlier and is parallel to the YZ plane. The terahertz light detector 13 detects the intensity of the electric field of the terahertz light L5 and converts the detected intensity to a current signal. This current signal is then converted to a voltage signal at an ammeter 20 and then is detected in a lock-in detection by a lock-in amplifier 21 in synchronization with the timing with which the light chopper 4 chops the pump light. An output signal from the lock-in amplifier 21 constituting the detection signal indicating the intensity of the electric field of the terahertz light then undergoes an A/D conversion at an A/D converter 22, and the signal resulting from the conversion is provided to the control/processing unit 23 which may be constituted with a computer and the like.

The repetition rate of the femtosecond pulse light L1 radiated from the femtosecond pulse light source 1 is in the order of several KHz to 100 MHz. As a result, the terahertz pulse light L4, too, is radiated repeatedly from the terahertz light generator 6 in the order of several KHz to 100 MHz.

Thus, the terahertz pulse light L5 with the same waveform originating from the specimen 100, reaches the terahertz light detector 13 repeatedly in the order of several KHz to 100 MHz. Accordingly, the time-domain intensity change of the electric field of the terahertz pulse light L5 is measured in the embodiment by adopting the so-called pump/probe method whereby a time delay is created between the pump light L2 and the probe light L3 to measure the waveform of the terahertz pulse light L5. Namely, the timing on which the probe light L3 arrives at the terahertz light detector 13 is delayed by a time length τ relative to the timing on which the pump light L2 arrives at the terahertz light generator 6, so as to enable the measurement of the electric field intensity of the terahertz pulse light L5 at a time point delayed by the time length τ by the terahertz light detector 13. In other words, a gate is applied to the terahertz light detector 13 by the probe light L3. In addition, by causing the movable mirror 8 to move gradually, the delay time τ is gradually altered. Thus, the intensity of the electric field of the terahertz pulse light L5 which repeatedly arrives at the terahertz light detector 13 are detected with the terahertz light detector 13 in correspondence to varying lengths of delay time τ while the optical path length altering device offsets the timing with which the gate is applied, and the detection results are sequentially obtained as electrical signals, thereby achieving a measurement of a time-domain (or time-series) waveform E(τ) of the electric field intensity of the terahertz pulse light L5.

In the embodiment, when measuring the time-domain waveform E(τ) of the intensity of the electric field achieved with the terahertz pulse light, the control/arithmetic processing unit 23 provides a control signal that will gradually change the length of the delay time τ to the moving mechanism 25, and sequentially stores data provided by the A/D converter 22 in response into a memory (not shown) within the control/arithmetic processing unit 23. Finally, the entire data indicating the time-domain waveform E(τ) of the electric field intensity of the terahertz pulse light are stored into the memory.

Such data indicating the time-domain waveform E(τ) are obtained by placing the reference specimen 100b on the specimen holder 30 and by placing the measurement target specimen 100a on the specimen holder 30. The control/arithmetic processing unit 23 determines (obtains) specific characteristics (information) of the measurement target specimen 100a based upon these data and displays the determined characteristics at a display unit 24 such as a CRT. For instance, the control/arithmetic processing unit 23 calculates the complex dielectric constant of the measurement target specimen 100a through an arithmetic operation of the known art and displays the complex dielectric constant at the display unit 24.

In the embodiment, the elements 5, 6 and 11 through 19 described above constitute an optical system 40 that radiates a specific type of light onto the specimen 100 held at the specimen holder 30 and effects an optical function on the light obtained from the object.

Next, the structure adopted in the optical apparatus in the embodiment is explained in reference to FIGS. 3 and 4. In FIG. 3, a container main body 51 is indicated with a dotted line to show the internal structure clearly. In addition, in order to simplify the drawings, FIGS. 3 and 4 do not include the illustration of the optical system 40 and instead, a space 41 where the optical system 40 is disposed is indicated as a hatched area by using imaginary lines. The devices other than the optical system 40 in FIG. 1, e.g., the plane mirror 7, the movable mirror 8 and the plane mirrors 9 and 10 that guide the light from the light source 1 to the plane mirror 11 in the optical system 40 and the plain mirror 3 and the light chopper 4 that guide the light from the light source 1 to the condenser lens 5 in the optical system 40, are disposed outside the container main body 51.

In addition to the specimen holder 30 and the optical system 40 described above, the optical apparatus achieved in the embodiment includes the container main body 51 and an upper lid 52 which are chamber-forming members that constitute an evacuatable chamber 50, an optical system mounting base 53 to which the optical system 40 is fixed and three connecting rods 54a, 54b and 54c which are connecting members passing through the upper lid 52 with an airtight seal in such a manner that they are also allowed to become displaced relative to the upper lid 52.

The container main body 51 assumes a cylindrical shape with an open top and a solid bottom, and a flange portion 51a is formed on its upper side. The upper lid 52 is constituted of a disk and is fixed to the flange portion 51a of the container main body 51 with bolts 55. A packing 56 is disposed between the upper lid 52 and the flange portion 51a so that the open top of the container main body 51 is closed off with an airtight seal by the upper lid 52. Around the center of the upper lid 52, a window portion 52a constituted of a material through which the terahertz light L4 and the terahertz light L5 are both transmitted is formed. As shown in FIG. 3, at the side of the container main body 51, a connecting port 57 at which a piping to connect with a vacuum pump (not shown) is connected is provided. Through the connecting port 57, the chamber 50 formed by the container main body 51 and the upper lid 52 can be evacuated.

In the embodiment, a disk is used to constitute the optical system mounting base 53. The optical system 40 is permanently mounted at the mounting base 53 with a mounting member (not shown). The optical system 40 and the optical system mounting base 53 are both disposed within the chamber 50, and the specimen holder 30 is disposed in the atmosphere outside the chamber 50. In the embodiment, the specimen holder 30 is simply placed on the upper lid 52 instead of being fixed onto the upper lid 52.

The connecting rod 54a passes through a through hole formed at the upper lid 52, with its upper end fixed to the specimen holder 30 with a bolt 58 and its lower end fixed to the mounting base 53 with a bolt 59, as shown in FIG. 4. Thus, the specimen holder 30 and the mounting base 53 are connected via the connecting rod 54a.

As shown in FIG. 4, an airtight structural unit 60 is formed around the through hole at the upper lid 52, and the connecting rod 54a passes through the upper lid 52 with an airtight seal in such a manner that it is also allowed to become displaced relative to the upper lid 52. In the embodiment, the airtight structural unit 60 adopts a structure similar to that of a gauge port of the vacuum gauge. Namely, the airtight structural unit 60 includes an O-ring 61, a tubular member 62 having a stage for supporting the upper side of the O-ring 61 and securely attached to the area around the through hole at the upper lid 52, a ring member 63 which supports the lower side of the O-ring 61 and a bowl-shaped member 64 having a through hole, which is fixed to the tubular member 62 and prevents the ring member 63 from slipping downward. The position of the connecting rod 54a relative to the airtight structural unit 60 can be altered within the range of the elastic deformation of the O-ring 61.

Although not shown, the connecting rods 54b and 54c, too, pass through the upper lid 52 with an airtight seal in such a manner that they are allowed to become displaced relative to the upper lid 52 and connect the specimen holder 30 and the mounting base 53, as does the connecting rod 54a. As shown in FIG. 3, the three connecting rods 54a to 54c are set substantially parallel to the line of the virtual central axis (not shown) extending along the vertical direction around the central line with substantially uniform angular intervals (over 120 degrees intervals in the embodiment) and over distances substantially equal to one another from the central line. With the connecting rods 54a to 54c disposed as described above, it is possible to maintain the specific positional relationship between the specimen holder 30 and the mounting base 53 in a stable manner without having to greatly increase the strength of the connecting rods 54a to 54c. However, the positions at which the connecting rods 54a to 54c should be disposed are not limited to this example.

As explained above, the three connecting rods 54a to 54c used in the embodiment constitute connecting members connecting between the specimen holder 30 and the mounting base 53, which also maintain the specific relationship between the specimen holder 30 and the mounting base 53 relative to each other. However, the connecting members may assume a structure other than that described above.

In the embodiment, the length of the connecting rods 54a to 54c is set smaller than the depth of the container main body 51, and thus, the mounting base 53 is lifted off the bottom of the container main body 51. Namely, the structural body constituted with the specimen holder 30, the optical system 40, the optical system mounting base 53 and the connecting rods 54a to 54c is supported at the underside surface of the specimen holder 30 set in contact with the upper lid 52. The optical system 40 and the optical system mounting base 53 are suspended by the connecting rods 54a to 54c. As explained earlier, since this structural body is not fixed in any way whatsoever to the upper lid 52 and the container main body 51, the connecting rods 54a to 54c are each allowed to alter its position relative to the airtight structural unit 60.

It is to be noted that although not shown in FIGS. 3 and 4, the elements 20 to 25 in FIG. 1 are disposed outside the chamber 50. An electric wiring (not shown) connecting a specific element disposed outside the chamber 50, e.g., the ammeter 20, and a specific element in the optical system 40 inside the chamber 50, e.g., the detector 13, is disposed by adopting an airtight structure in the known art so as to sustain the chamber 50 in an airtight state.

In the embodiment, the specimen 100 is measured with an evacuated state of the chamber 50. As a result, the optical path in the optical system 40 disposed inside the chamber 50, except for the area around the opening 30a of the specimen holder 30, is set in a vacuum state. Thus, almost all the molecules and the like present in the atmosphere in the optical path are eliminated and for this reason, hardly any deterioration in measurement accuracy due to molecules and the like present in the optical path occurs. In addition, since the specimen holder 30 is disposed in the atmosphere, the specimen 100 can be replaced easily and quickly while the inside of the chamber 50 is sustained in a vacuum state. It is to be noted that the specimen 100 may instead be measured by first evacuating the chamber 50 and then keeping the chamber 50 in the sealed state, filled with a purging gas.

In addition, the integrated structural body, which includes the specimen holder 30, the optical system 40, the optical system mounting base 53 and the connecting rods 54a to 54c still retains a degree of freedom with regard to its position in the embodiment. Thus, even when the upper lid 52 and the container main body 51 become deformed due to an evacuation of the chamber 50 and the deformation causes a change in the position of the structural body itself, the positional relationship between the specimen holder 30 and the optical system mounting base 53, i.e., the positional relationship between the specimen 100 and the optical system 40, remains entirely unchanged in the embodiment. Consequently, by adopting the embodiment, it is assured that the measurement accuracy is not impaired due to such a deformation caused by evacuation even if the thicknesses of the upper lid 52 and the container main body 51 are not increased to enhance their strength, i.e., even if the weight of the apparatus is not increased.

As explained above, by adopting the embodiment, the measurement accuracy can be improved by greatly reducing the quantity of molecules and the like in the atmosphere present in the optical path and also, two requirements, i.e., speedy replacement of the specimen 100 and minimization of the extent to which the measurement accuracy becomes impaired due to deformation resulting from evacuation, can both be satisfied without having to increase the weight of the apparatus.

In the embodiments, the peripheral wall portion of the container main body 51 is formed in a cylindrical shape, and in conjunction with such a container main body, the upper lid 52 assumes a flat disk shape. Thus, the extent to which the individual portions become deformed due to the evacuation is greatly lowered compared to the extent of deformation occurring in a container main body 51 and an upper lid 52 together forming a rectangular parallelepiped chamber, without having to increase the thicknesses of the individual portions. As explained earlier, the positional relationship between the optical system 40 and the specimen 100 is maintained unchanged regardless of how the container main body 51 and the upper lid 52 may have become deformed and thus, it is not necessary to reduce the extent of the deformation attributable to the evacuation in the embodiment. However, it is still more desirable to reduce the extent of deformation since the extent of force subjected to the O-ring 61 and the connecting rods 54a to 54c will then be reduced. Although not shown, it is even more desirable to form the upper lid 52 with its upper side formed in a somewhat distended shape so as to further reduce the extent of deformation occurring in the upper lid 52 due to the evacuation.

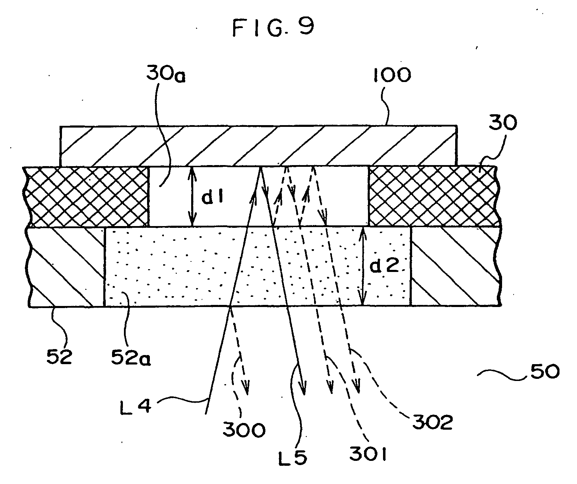

When the terahertz pulse light L4 passes through the window portion 52a at the upper lid 52 toward the specimen 100 and when the terahertz pulse light L5 from the specimen 100 passes through the window portion 52a into the chamber 50, reflection and multiple reflection of the terahertz pulse light L4 and the terahertz pulse light L5 tend to occur at the interface of the window portion 52a. FIG. 9 is a schematic illustration presenting an example of reflection and multiple reflection of terahertz light at the window portion interface. The terahertz pulse light L4 passes through the window portion 52a from the chamber side into the opening 30a and then enters the specimen 100. The terahertz pulse light L5 reflected off the specimen 100 passes through the window portion 52a, enters the chamber 50 and returns to the optical system 40 (see FIG. 1).

A light beam 300 in FIG. 9 is part of the terahertz pulse light L4, which is reflected at the window portion 52a. In addition, light beams 301 and 302 are light resulting from multiple reflection of part of the terahertz pulse light L5 occurring between the window portion 52a and the specimen 100. The multiply reflected light 301 has been reflected once each at the window portion 52a and the specimen 100, whereas the multiply reflected light 302 has been reflected twice each at the window portion 52a and the specimen 100. The reflected light 300, the multiply reflected light 301 and the multiply reflected light 302 are detected by the terahertz light detector 13 as is the terahertz pulse light L5.

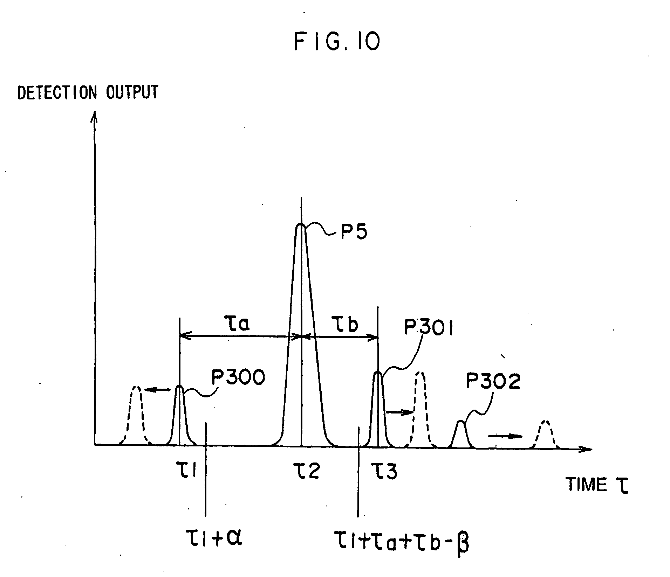

FIG. 10 shows the detection output obtained under such circumstances, with the detection output indicated along the vertical axis and the time indicated along the horizontal axis. A peak P300 is the detection output corresponding to the reflected light 300, a peak P5 indicates the detection output corresponding to the terahertz pulse light L5 and peaks P301 and P302 respectively indicate the detection outputs corresponding to the multiply reflected light 301 and the multiply reflected light 302. The time lags among the time points at which these peaks P5, P300, P301 and P302 exist are determined in correspondence to the differences among the optical path lengths corresponding to the terahertz light L5, the reflected light 300, the multiply reflected light 301 and the multiply reflected light 302. While FIG. 9 only shows the multiply reflected light having been reflected once each and twice each at the window portion 52a and the specimen, numerous beams of multiply reflected light having been reflected more times at the window portion 52a and the specimen are observed in reality.

Generally speaking, a signal waveform with a long time domain is needed in order to improve the wave number resolution in a time-domain waveform measurement. However, when a long time domain is assumed, a signal corresponding to multiply reflected light is contained in the detection output, which makes the analyzing process difficult. Accordingly, either of the two methods explained below is adopted in the embodiment to eliminate the adverse effect of multiple reflection.

In the first method, the distance d1 between the window portion 52a and the specimen 100 is increased to increase the difference between the lengths of the optical paths of the terahertz light L5 and of the multiply reflected light beams 301 and 302. A larger difference in the optical path length results in the shifts of the positions at which the peaks P301 and P302 manifest relative to the peak P5 to the right, as indicated by the dotted lines in FIG. 10, thereby widening the peak intervals. It is to be noted that the peak P300 corresponding to the reflected light 300 is made to shift further to the left relative to the peak P5 in such a case.

When x represents the wave number resolution, the corresponding distance that the movable mirror 8 needs to scan is 1/(2x). For instance, when the wave number resolution is 1cm⁻¹, a scanning distance of 5 mm is required. Thus, since the optical path length corresponding to the scanning distance of 5 mm is 10 mm, the distance between the specimen 100 and the window portion 52a should be set to 5 mm or more, as indicated in FIG. 9, in order to ensure that no multiple reflection manifests within the range corresponding to the scanning distance.

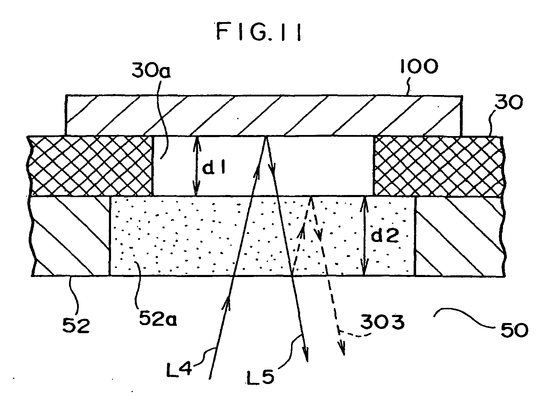

It is to be noted that in addition to the multiply reflected light beams 301 and 302 shown in FIGS. 9 and 10, there may be multiply reflected light 303 manifesting inside the window portion 52a, as shown in FIG. 11. If such multiply.reflected light 303 manifests within the range corresponding to the scanning distance, the thickness d2 of the window portion 52a should be increased to increase the length of the optical path of the multiply reflected light 303 so as to ensure the multiply reflected light 303 does not manifest within the range corresponding to the scanning distance.

Next, the second method is explained. As shown in FIG. 1, the signal output from the terahertz light detector 13 first undergoes the processing at the ammeter 20 and the lock-in amplifier 21, is then converted to a digital signal at the A/D converter 22 and undergoes the digital arithmetic processing at the control/arithmetic processing unit 23. In the second method, the peak positions of multiply reflected light on the time axis in FIG. 10 and the peak position of measuring light (the terahertz pulse light L5) which is not multiply reflected are obtained in advance to be used as reference data. Accordingly, the control/arithmetic processing unit 23 executes digital arithmetic processing so as to eliminate any adverse effect of multiple reflection based upon these reference data. The reference data may be obtained during, for instance, the adjustment executed as part of the optical apparatus production process.

The reference data may be obtained through the following procedure.

During the apparatus adjustment process, a reference glass plate or a reference mirror is placed on the holder 30 in place of the specimen 100 shown in FIG. 9, and then a measurement is executed by generating terahertz pulse light L4. Through this measurement, output data similar to those presented in FIG. 10 are obtained. Since the distances d1 and d2 in FIG. 9 are constant at all times, the peak positions of the reflected light 300, the terahertz light L5 and the multiply reflected light beams 301 and 302 in FIG. 10 are always the same. In addition, the output value of the reflected light 300, which is always observed when measurement is performed, is a substantially a constant value since the measurement is always performed under identical conditions. For instance, if d1 = d2 = 10 (mm), τa and τb in FIG. 10 are approximately 66.7 (ps).

Accordingly, the output value at the peak P300 and the positional relationships among the peaks P300, P5 and P301, for instance, are stored in memory at the control/arithmetic processing unit 23 as reference data. During the measurement, a peak identical to the peak P300 is detected, and with τ1 representing the time point corresponding to the peak, analysis processing is executed by using the data obtained during a period between (τ1 + α) and (τ1 + τa + τb - β) on the time axis. In this situation, α and β should be set so as to remain unaffected by the peaks P300 and P301.

If the peak P5 and the peak P301 corresponding to the multiply reflected light partially overlap each other, the peak P5 and the peak P301 need to be separated further away from each other by increasing the thickness of the holder 30 so as to increase d1.

The adverse effects of reflected light and multiply reflected light can be eliminated with ease by adopting either of the methods described above in a spectrometering apparatus that executes time domain measurement. In contrast, the effect of multiply reflected light cannot be eliminated from the measuring light readily in a more common spectrometering apparatus such as a dispersion spectrometering apparatus that does not execute time domain measurement and detects light all at once instead of detecting light in time domain.

It is to be noted that the window portion 52a should be constituted by using a material such as polyethylene or quartz with a low absorption coefficient with regard to terahertz light. While silicon, too, has a low absorption coefficient, the high refractive index of silicon causes a significant reflection loss and for this reason, polyethylene or quartz are preferable to silicon. In addition, while sapphire, GaAs and Ge do not provide the performance levels of polyethylene, quartz and silicon, they are still available materials to be considered for the window portion.

It is to be noted that while an explanation is given in reference to the embodiment on an example in which the present invention is adopted in a reflection type spectrometering apparatus, the present invention may also be adopted in a transmission type spectrometering apparatus in a similar manner. In such an application, the optical path located at the boundary between the illumination optical system and the detection optical system, in which the specimen is placed, should be disposed outside of a vacuum chamber. For instance, wall surfaces facing opposite each other at a vacuum chamber with chamber external space present between them may be formed and a transmission window member may be disposed at each of the wall surfaces. The space between the two transmission window members is equivalent to the optical path at the boundary mentioned above, and a transmission type apparatus can be achieved by placing the specimen in this optical path.

### (Second Embodiment)

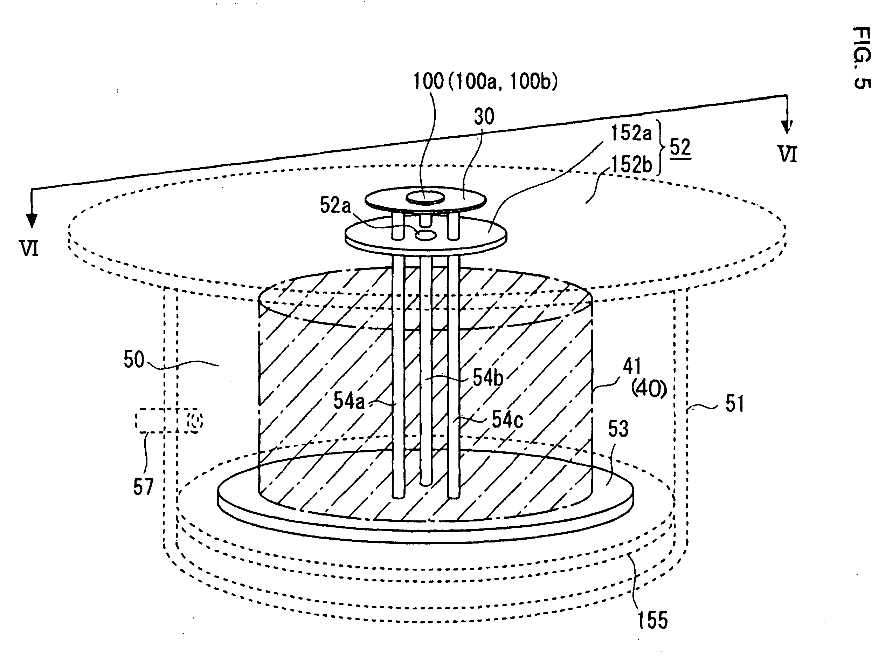

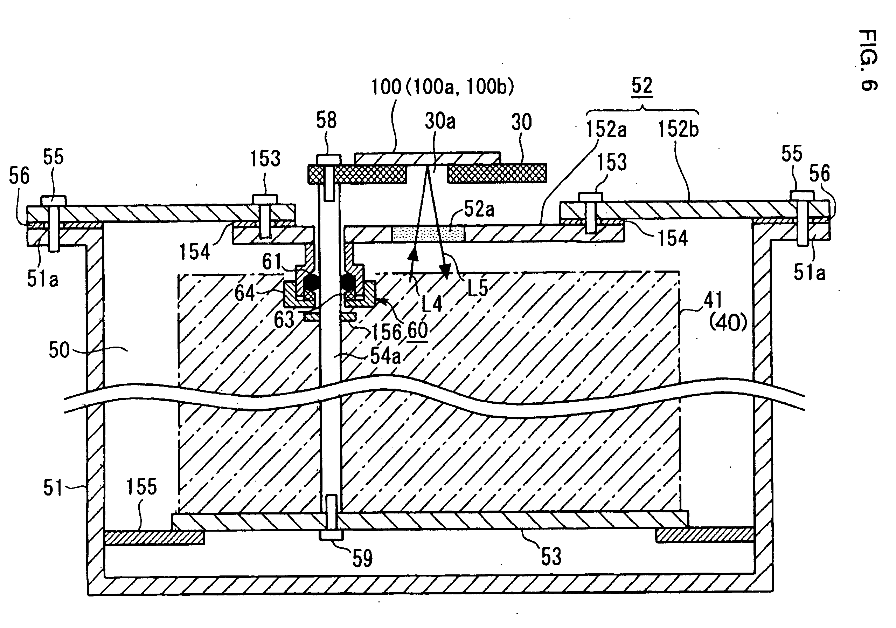

FIG. 5 is a schematic perspective showing the structure adopted in the optical apparatus in the second embodiment of the present invention. FIG. 6 is a schematic sectional view taken along line VI-VI in FIG. 5.

The main differences that distinguish the optical apparatus achieved in this embodiment from the optical apparatus in the first embodiment are described in (i) to (iii) below.
(i) Its upper lid 52 is constituted with two separate parts, i.e., a disk 152a at the center and an annular ring 152b disposed further out relative to the disk. The inner circumferential side of the annular ring 152b is fixed to the outer circumferential side of the disk 152a with bolts 153. A packing 154 is disposed between the annular ring 152b and the disk 152a so as to fix the annular ring 152b and the disk 152a to each other with an airtight seal.
(ii) The optical system mounting base 53 is set on an annular support plate 155 disposed near the bottom of the container main body 51.
(iii) The length of the connecting rods 54a to 54c is set greater than the depth of the container main body 51 at the support plate 155, and the outer circumferential portion of the mounting base 53 is set on the support plate 155. Thus, the structural body constituted with the specimen holder 30, the optical system 40, the optical system mounting base 53 and the connecting rods 54a to 54c is supported from below by the support plate 155 instead of being supported in a suspended state.

The connecting rods 54a to 54c are disposed closer to the center so as to pass through the disk 152a. The external diameter of the specimen holder 30 is set smaller than the internal diameter of the annular ring 152b. A slippage preventing ring 156 is bonded onto each of the connecting rods 54a to 54c so as to prevent the disk 152e from slipping downward during the assembly process.

The embodiment in which the structural body that includes the specimen holder 30 and the optical system 40 retains a degree of freedom with regard to its position instead of being fixed to the upper lid 52 and the container main body 51 achieves advantage as similar to those of the first embodiment explained earlier.

### (Third Embodiment)

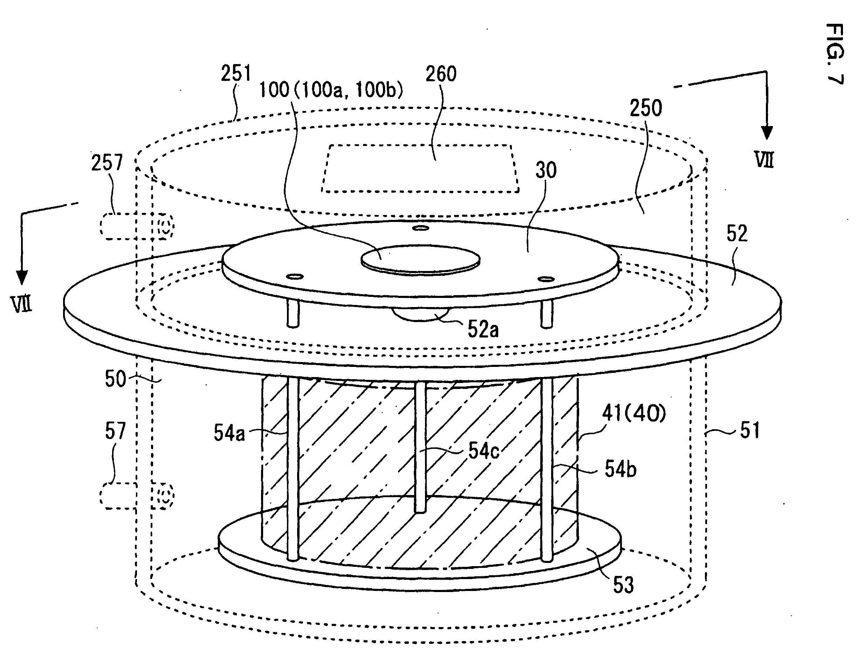

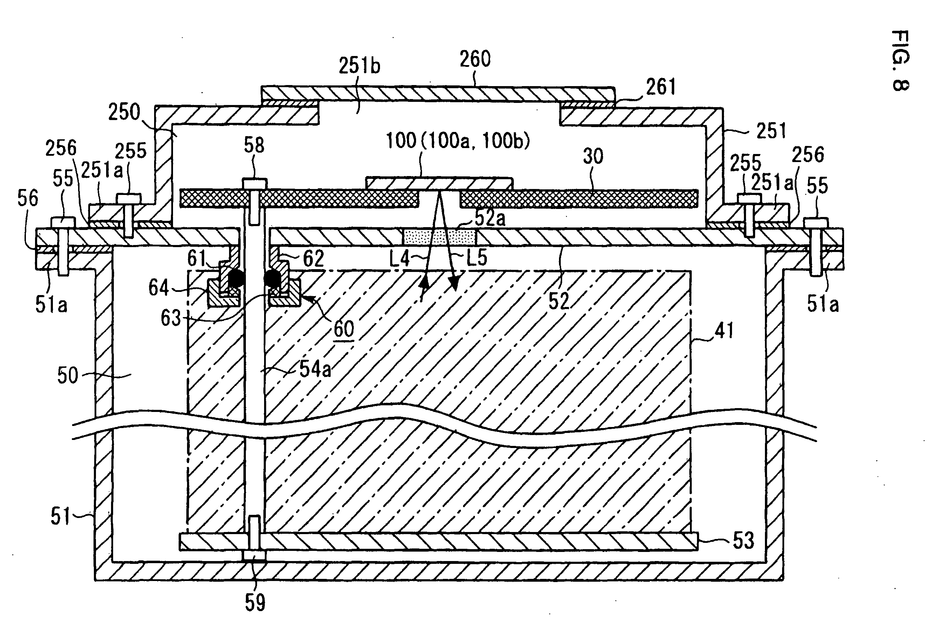

FIG. 7 is a schematic perspective showing the structure adopted in the optical apparatus in the third embodiment of the present invention. FIG. 8 is a schematic sectional view taken along line VII-VII in FIG. 7.

The main differences that distinguish the optical apparatus achieved in this embodiment from the optical apparatus in the first embodiment are described in (i) and (ii) below.
(i) The length of the connecting rods 54a to 54c is set greater than the depth of the container main body 51 and the mounting base 53 is mounted on the bottom of the container main body 51 via bolts 59. Thus, the structural body constituted with the specimen holder 30, the optical system 40, the optical system mounting base 53 and the connecting rods 54a to 54c is supported from below at the bottom of the container main body 51 instead of being supported in a suspended state.
(ii) A cylindrical member 251 is provided over the upper lid 52, thereby forming a chamber 250 which is used as a specimen chamber. In this embodiment, the upper lid 52 functions as a barrier between the chamber 50 and the chamber 250.

The cylindrical member 251 has an open bottom and a flange portion 251a is formed at its bottom. As the flange portion 251a is fixed onto the upper surface of the outer circumferential side of the upper lid 52 with bolts 255 via a packing 256, the chamber 250 is formed inside the cylindrical member 251. The specimen holder 30 and the specimen 100 are placed inside the chamber 250. At the top of the cylindrical member 251, a transfer port 251b through which the specimen 100 can be transferred into/out of the chamber 250 is formed. The transfer port 251b is opened/closed by a switching lid 260 which can be opened/closed freely by a switching mechanism (not shown). Reference numeral 261 in FIG. 8 indicates a packing which keeps the chamber 250 in an airtight state when the switching lid 260 is closed. As shown in FIG. 7, a connecting port 257 at which a piping is connected to achieve a connection with a vacuum pump (not shown) is provided at a side of the cylindrical member 251. This structure allows the chamber 250 formed by the upper lid 52 and the cylindrical member 251 to be evacuated on its own, independently of the chamber 50.

In the embodiment, the specimen 100 is measured with the chambers 50 and 250 both in an evacuated state. Since the optical system 40 is disposed inside the chamber 50 and the specimen holder 30 and the specimen 100 are placed inside the chamber 250, the entire optical path is sustained in a vacuum state. Thus, molecules in the atmosphere that would normally be present in the optical path are completely eliminated, thereby ensuring that the accuracy of the measurement or the like is not lowered in any way whatsoever due to the presence of molecules and like in the optical path. In addition, the specimen 100 is replaced by setting the pressure in the chamber 250 to the atmospheric pressure level while sustaining the vacuum state in the chamber 50. Thus, only the chamber 250 needs to be re-evacuated to measure the new specimen. Since the space that needs to be evacuated after replacing the specimen 100 is considerably smaller, the length of time required for measurement object replacement is greatly reduced. It is to be noted that the specimen 100 may instead be measured in a sealed state by, for instance, first evacuating the chambers 50 and 250 and then filling them with a purging gas.

As in the first embodiment, the integrated structural body achieved in this embodiment, which is constituted with the specimen holder 30, the optical system 40, the optical system mounting base 53 and the connecting rods 54a to 54c retains a degree of freedom with regard to its position instead of being fixed onto the upper lid 52, the container main body 51 and the cylindrical member 251 forming the chambers 50 and 250. Thus, even when the upper lid 52, the container main body 51 and the cylindrical portion 251 become deformed as the chambers 50 and 250 are evacuated, the positional relationship between the specimen holder 30 and the optical system mounting base 53, i.e., the positional relationship between the specimen 100 and the optical system 40, remains entirely unchanged in the embodiment. While the deformation may change the position of the structural body itself, the positional relationship remains unchanged. Consequently, by adopting the embodiment, it is assured that the measurement accuracy is not lowered due to such deformation caused by evacuation even if the thicknesses of the upper lid 52 and the container main body 51 are not increased to raise their strength and the weight of the apparatus is not increased.

As explained above, by adopting the embodiment, the measurement accuracy can be improved by eliminating molecules and the like in the atmosphere present in the optical path and also, two requirements, i.e., speedy replacement of the specimen 100 and minimization of the extent to which the measurement accuracy becomes lowered due to deformation, can both be satisfied without having to increase the weight of the apparatus.

It is to be noted that in this embodiment, too, the length of the connecting rods 54a to 54c may be set smaller than the depth of container main body 51 to support the optical system 40 and the optical system mounting base 53 in a state in which they are suspended by the connecting rods 54a to 54c as in the first embodiment.

In addition, the window portion 52a may be formed as an opening with a vacuum valve such as a shutter disposed to open/close the opening.

### (Fourth Embodiment)

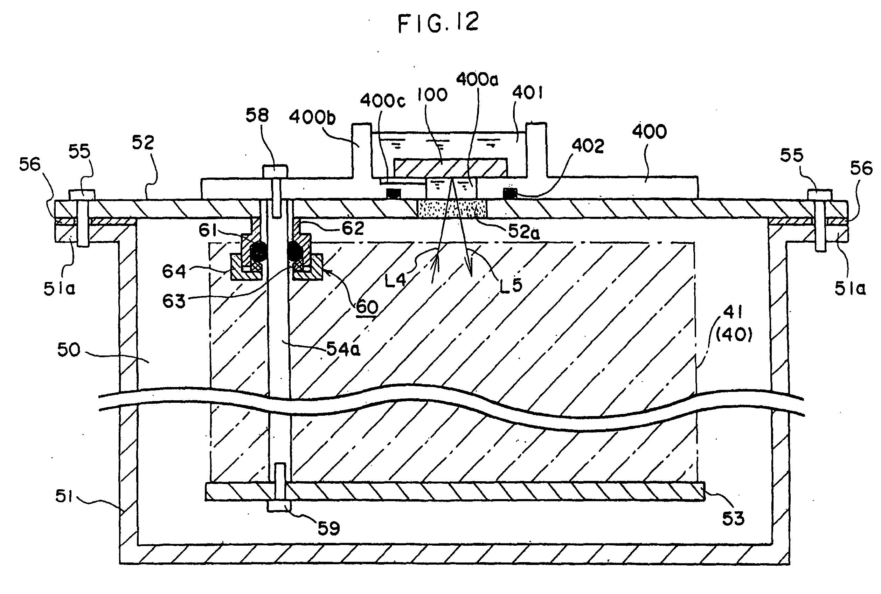

FIG. 12 is a schematic sectional view showing the structure adopted in the optical apparatus in the fourth embodiment of the present invention. The apparatus in FIG. 12 includes a specimen holder 400 instead of the specimen holder 30 provided in the apparatus shown in FIG. 4. At the upper surface of the specimen holder 400, a tubular wall portion 400b is formed so as to surround an opening 400a. Inside the recessed space enclosed by the wall portion 400b is filled with a fluid 401 with a low absorption coefficient with regard to terahertz light. The specimen 100 is placed over the opening 400a in the recessed space filled with the fluid 401. A groove 400c is formed at the specimen stage surface of the specimen holder 400, so as to communicate the area over which the opening 400a ranges with the area over which the specimen 100 is placed. As a result, the fluid 401 also fills the opening 400a. The clearance between the bottom surface of the specimen holder 400 and the upper surface of the upper lid 52 is sealed with an O-ring seal 402, and thus, leakage of the fluid 401 is prevented.

By adopting the embodiment in which the opening space between the window portion 52a and the specimen 100 is filled with the fluid 401, molecules of water vapor and CO₂, which readily absorbs terahertz light, can be eliminated from the optical paths of the terahertz light beams L4 and L5. In addition, by using a fluid 401 having a refractive index close to the refractive index of the material constituting the window portion 52a, reflection at the interface of the fluid 401 and the window portion 52a can be prevented to reduce the extent of the adverse effect of the multiple reflection.

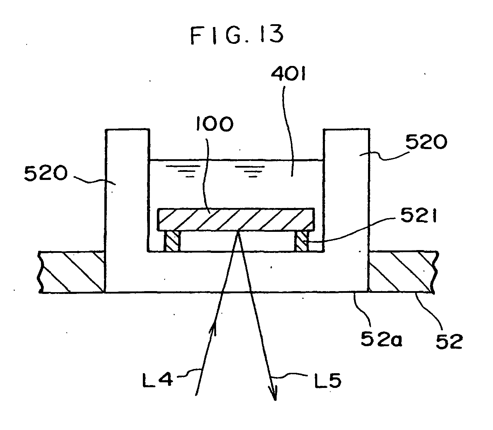

FIG. 13 shows a first example of a variation of the fourth embodiment, which is achieved by forming a wall portion 520 at the upper surface of the window portion 52a, filling the area enclosed by the wall portion 520 with a fluid and immersing the specimen 100 in the fluid. Reference numeral 521 indicates a specimen stage on which the specimen 100 is placed.

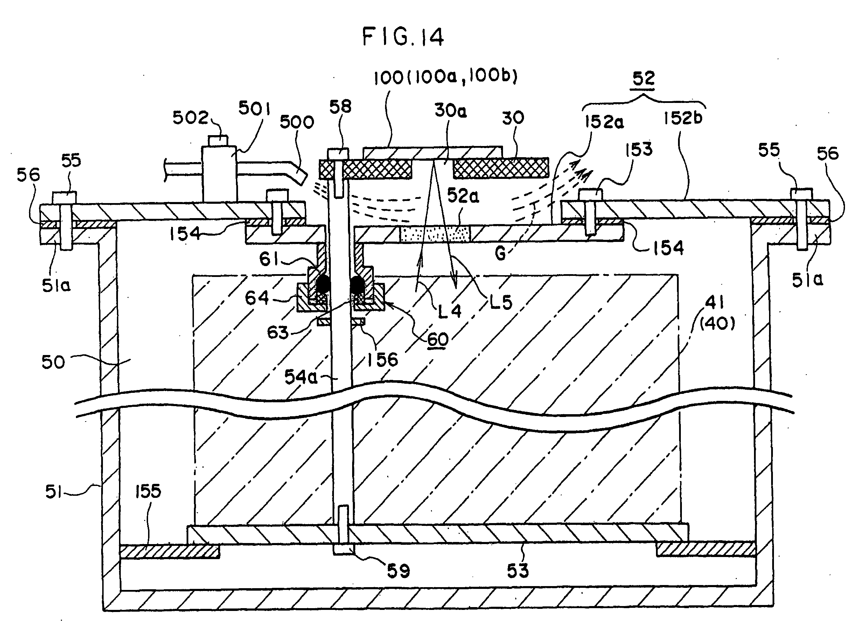

FIG. 14 shows a second example of a variation of the fourth embodiment, in which the space between the specimen 100 and the window portion 52a is purged with gas instead of filling the space with the fluid 401. The apparatus shown in FIG. 14 is achieved by fixing a gas purge nozzle 500 onto the annular ring 152b in the apparatus in FIG. 6 with a fastening fixture 501. The fastening jig 501 is locked onto the disk 152 with a bolt 502. Through the gas purge nozzle 500, a purging gas G which may be nitrogen, helium or argon, is injected into the space between the specimen holder 30 and the disk 152a. As a result, the atmosphere in the space between the specimen holder 30 and the disk 152a is replaced with the purging gas and thus, the absorption of the terahertz light L4 and the terahertz light L5 by water vapor and CO2 can be prevented.

While the present invention has been explained in reference to various embodiments and variations thereof, the present invention is not limited to those embodiments or the examples variation.

For instance, while the present invention is adopted in a reflection type apparatus in which measurement is executed by using light reflected from the measurement object in the embodiments and the examples of variations thereof explained above, the present invention may also be adopted in a transmission type apparatus having a chamber formed in an appropriately modified shape, which executes measurement by using light transmitted through the measurement object.

In addition, while an explanation is given above in reference to the embodiments and the examples of variations thereof on an example in which the present invention is adopted in measuring apparatuses that execute measurement by using terahertz light, the present invention may also be adopted in any of various other types of optical apparatuses that use terahertz light and any of various types of optical apparatuses that do not use terahertz light.

## Claims

1. A spectrometering apparatus comprising:
a chamber that is evacuated to achieve a vacuum state and includes a light transmission window;
a generator that generates measuring light;
an illumination optical system that guides the measuring light onto a specimen;
a detector that detects specimen light from the specimen; and
a detection optical system that guides the specimen light from the specimen irradiated with the measuring light to the detector, wherein:
the generator, the illumination optical system, the detector and the detection optical system are disposed inside the evacuated chamber; and
the specimen is placed outside the evacuated chamber.

2. A spectrometering apparatus comprising:
a chamber that is evacuated to achieve a vacuum state and includes a light transmission window;
a generator that generates terahertz pulse light;
an illumination optical system that guides the terahertz pulse light onto a specimen;
a detector that detects specimen light from the specimen; and
a detection optical system that guides the specimen light from the specimen irradiated with the terahertz pulse light to the detector, wherein:
the generator, the illumination optical system, the detector and the detection optical system are disposed inside the evacuated chamber; and
the specimen is placed outside the evacuated chamber.

3. A spectrometering apparatus according to claim 2, wherein:
the transmission window is constituted of a polyethylene or quartz.

4. A spectrometering apparatus according to claim 2 or claim 3, further comprising:
a laser light source that generates laser pulse light;
a splitter that splits the laser pulse light generated by the laser light source into pump light to be guided to the generator and probe light to be guided to the detector; and
an optical path length altering device that alters an optical path length of the pump light guided to the generator and/or an optical path length of the probe light guided to the detector, wherein:
the detector samples the specimen light from the specimen entering via the transmission window in synchronization with an irradiation timing of the pump light and/or the probe light; and
a distance between the transmission window and the specimen is set larger than an optical path length altering range of the optical path length altering device.

5. A spectrometering apparatus according to claim 4, wherein:
the laser light source, the splitter and the optical path length altering device are disposed outside the chamber.

6. A spectrometering apparatus according to claim 2 or claim 3, further comprising:
a laser light source that generates laser pulse light;
a splitter that splits the laser pulse light generated by the laser light source into pump light to be guided to the generator and probe light to be guided to the detector; and
an optical path length altering device that alters an optical path length of the pump light guided to the generator and/or an optical path length of the probe light guided to the detector, wherein:
the detector samples the specimen light from the specimen entering via the transmission window in synchronization with an irradiation timing of the pump light and/or the probe light; and
the spectrometering apparatus further includes a processing circuit that separates and removes a signal attributable to reflected light resulting from reflection at the transmission window from a detection signal input thereto from the detector.

7. A spectrometering apparatus according to claim 2 or claim 3, further comprising:
a laser light source that generates laser pulse light;
a splitter that splits the laser pulse light generated by the laser light source into pump light to be guided to the generator and probe light to be guided to the detector; and
an optical path length altering device that alters an optical path length of the pump light guided to the generator and/or an optical path length of the probe light guided to the detector, wherein:
the detector samples the specimen light from the specimen entering via the transmission window in synchronization with an irradiation timing of the pump light and the probe light; and
the spectrometering apparatus further includes a processing circuit that separates and removes a signal attributable to multiply reflected light resulting from multiple reflection occurring between the specimen and the transmission window from a detection signal input thereto from the detector.

8. A spectrometering apparatus comprising:
a chamber that has a light transmission window and is purged with gas which does not absorb terahertz pulse light;
a generator that generates terahertz pulse light;
an illumination optical system that guides the terahertz pulse light onto a specimen;
a detector that detects specimen light from the specimen; and
a detection optical system that guides the specimen light from the specimen irradiated with the terahertz pulse light to the detector, wherein:
the generator, the illumination optical system, the detector and the detection optical system are disposed inside the chamber; and
the specimen is placed outside the chamber.

9. A spectrometering apparatus according to claim 2 or claim 8, wherein:
a fluid tank, formed so as to allow the specimen to be immersed therein in a fluid with a small absorption coefficient for terahertz light and allow the fluid to be in contact with an outer surface of the transmission window, is disposed outside the chamber;
the illumination optical system guides the terahertz pulse light onto the specimen via the transmission window and the fluid inside the fluid tank; and
the detector receives the specimen light via the fluid inside the fluid tank and the transmission window.

10. A spectrometering apparatus according to claim 2 or claim 8, further comprising:
a gas jet device that replaces atmosphere in a space between the transmission window and the specimen with gas that does not absorb the terahertz pulse light by supplying the gas into the space between the transmission window and the specimen.

11. A spectrometering apparatus according to claim 1 or claim 2, further comprising:
a holder that holds the specimen outside the chamber;
a base disposed within the chamber, to which the generator and the detector are fixed; and
a connecting member that displaceably passes through a barrier wall of the chamber with airtight sealing and connects the base and the holder so as to fix positions thereof relative to each other.

12. A spectrometering apparatus comprising:
a first vacuum chamber and a second vacuum chamber separated from each other by a barrier wall having a light transmission window;
a holder disposed in the first vacuum chamber, which holds a specimen;
a light radiation unit disposed inside the second vacuum chamber, which guides measuring light onto the specimen in the first vacuum chamber via the light transmission window;
a light detection unit disposed in the second vacuum chamber, which receives specimen light from the specimen irradiated with the measuring light via the light transmission window;
a base disposed in the second vacuum chamber, to which the light radiation unit and the light detection units are fixed; and
a connecting member that displaceably passes through barrier wall with airtight sealing and connects the base and the holder so as to fix positions thereof relative to each other.

13. A spectrometering apparatus according to claim 11 or claim 12, wherein:
the connecting member includes a number of rod-like members disposed substantially parallel to a virtual centerline and set over distances substantially equal to one another from the centerline around the centerline over substantially uniform angular intervals.

14. A spectrometering apparatus according to claim 11 or claim 12, wherein:
a peripheral wall portion of the chamber is formed in a cylindrical shape.
